# EUROPEAN PATENT APPLICATION

(11) **EP 2 412 975 A2**
(43) Date of publication of application: **01.02.2012**
(21) Application number: 11175314.1
(22) Date of filing: 26.07.2011
(51) Int. Cl.: F03D 11/00

(54) **Wind turbine blade with damping element for edgewise vibrations**

(30) Priority: 27.07.2010 US 844293
(71) Applicant: Vestas Wind Systems A/S, 8200 Aarhus N (DK)
(72) Inventor: Link, Ryan, Houston, TX Texas 77008 (US)

(57) **Abstract**

A blade (20) for a wind turbine (10) generally includes a shell body (26) extending between a leading edge (30) and a trailing edge (32), an inner spar (36) supporting at least a portion of the shell body (26), and a damping element (42) coupled to the inner spar (36). The damping element (42) is configured to adjust the structural pitch of the blade (20) to dissipate edgewise vibrations of the blade (20). The damping element (42) may be incorporated into the spar (36) upon manufacture of the blade (20) or installed as a retro-fit modification to existing blades (20).

## Description

### Technical Field

This invention relates to damping the vibrations of a wind turbine blade. More specifically, this invention relates to an element for damping the edgewise vibrations of a wind turbine blade, a wind turbine blade including the element, and a method for damping edgewise vibrations with the element.

### Background

Long slim structures, such as wind turbines, will always sway in the wind. From an engineering viewpoint, swaying is the first fundamental vibration shape. Vibration shapes can occur in many different forms and at many different speeds, or more precisely frequencies. These frequencies are often called the natural frequencies, and each corresponds to a particular vibration shape.

Two major types of natural vibrations (i.e., resonant oscillations) associated with the blade of a wind turbine are flapwise and edgewise vibrations. Flapwise vibrations occur in a plane perpendicular to the leading and trailing edges of the blade. Edgewise vibrations occur in a plane through the leading and trailing edges. Both types of vibrations place significant loads on the blade that can intensify fatigue damage and lead to failure. Therefore, it is important to avoid exciting these vibrations, and/or damping these vibrations once being excited.

Edgewise vibrations refer to blade vibrations in the general direction of the chord of the airfoil of the blade and are characterized by a slender blade cross section in the direction of the vibration movement, so there is almost no air resistance force to dampen the movement once started, as contrasted with a flapwise movement which has relatively large aerodynamic damping. Thus, the natural damping of edgewise vibrations is very weak and consequently it takes a long time for the vibrations to dissipate. In some cases, the vibrations can even be perpetually self-sustaining or unstable (i.e., ever increasing until fracture of the blade).

To prevent, or at least reduce the likelihood of, such an outcome, it is desirable to dampen edgewise vibrations through some other mechanism or physical principle. In this regard, several ways to dampen edgewise vibrations of a structural blade have been developed. For example, WO 95/21327 discloses a blade having an oscillation-reduction element oriented in the direction of unwanted oscillations. The oscillation-reduction elements disclosed therein are tuned liquid dampers. These dampers are specifically designed (i.e., "tuned") to have a natural frequency substantially corresponding to the dominating natural frequency of the blade. As such, their effectiveness at damping vibrations is frequency-dependent. They also typically require maintenance and can be difficult to access and install. Passive dampers are also known. One example of a passive damper is disclosed in WO 99/43955. However, because passive dampers are typically difficult to design and implement, the number of adequate solutions developed has been limited.

Accordingly, there remains a need for improvement in damping and controlling unwanted vibrations in wind turbine blades. More particularly, there is a need for an apparatus and method for damping edgewise vibrations in wind turbine blades in a manner that overcomes the drawbacks of existing apparatus and methods.

### Summary

This invention in one embodiment is a blade for a wind turbine. The blade generally includes a shell body, an inner spar supporting at least a portion of the shell body, and a damping element coupled to the inner spar. The damping element is configured to adjust the principal axes of the blade relative to the shell body to dissipate vibrations of the blade.

Different embodiments of the damping element are disclosed as examples. The term "damping element" refers to some or all of these embodiments, together with equivalents to such embodiments. The damping element may include, for example, an element coupled to the inner spar in a variety of different orientations and/or configurations.

In one of the various embodiments of this invention, a blade for a wind turbine includes a shell body with a leading edge and a trailing edge. A chord of the shell body extends between the leading and trailing edges. A spar is located within the shell body and supports at least a portion of the shell body. The spar has a generally tubular configuration over at least a portion of its length. In one embodiment, a damping element is coupled to the spar and contained within the tubular configuration of the spar and extends less than the entire length of the spar. The damping element is configured to orient a structural pitch of the blade obliquely relative to the chord so as to reduce edgewise vibrations of the blade. The damping element may have a generally linear or an arcuate cross-sectional configuration. The tubular configuration of the spar may have a generally rectangular cross section with a pair of spaced first walls each oriented generally parallel to the chord and joined at four corners to a pair of spaced second walls, each oriented generally perpendicular to the chord. In one embodiment, the damping element extends diagonally across the rectangular cross-section of the spar between a pair of the corners.

There may be a single damping element in the blade or a plurality of damping elements coupled to the blade. Additionally, the damping element may be at least partially formed with the blade or separately attached thereto. As such, the invention provides a stand-alone damping element in addition to a wind turbine blade incorporating such an element. The stand-alone damping element may be coupled to the inner spar or to only a portion of the spar to dissipate vibrations of the blade.

Finally, a wind turbine incorporating the blade and damping element is also provided, along with a method of dissipating edgewise vibrations in the blade of such a wind turbine. Thus, the method involves operating the wind turbine so that the blade experiences edgewise vibrations. In response, the damping element dissipates or dampens vibrations primarily in the flapwise direction.

This invention in other embodiments includes the ability to retrofit a wind turbine blade to include a damping element according to various embodiments to address and dampen edgewise vibrations.

These and other aspects will be made more apparent by the detailed description and claims below, as well as by the accompanying drawings. Note that when describing the same type of elements, numerical adjectives such as "first" and "second" are merely used for clarity. They are assigned arbitrarily and may be interchanged. As such, the use of these adjectives in the claims may or may not correspond to the use of the same adjectives in the detailed description (e.g., a "first element" in the claims might refer to any such "element" and not necessarily the ones labeled "first" in the detailed description below).

### Brief Description of the Drawings

The objectives and features of the invention will become more readily apparent from the following detailed description taken in conjunction with the accompanying drawings in which:

Fig. 1 is a perspective view of one embodiment of a wind turbine;

Fig. 2 is a perspective view of a blade on the wind turbine of Fig. 1;

Fig. 3 is a sectional view taken along line 3-3 in Fig. 2;

Fig. 4 is a sectional view similar to Fig. 3 showing one example of a damping element;

Figs. 4A-4B are sectional views similar to Fig. 4 showing alternative embodiments of a damping element;

Fig. 5 is a view similar to Fig. 2 with a portion of the shell body broken away to expose the spar; and

Fig. 6 is an enlarged view of the spar shown in phantom lines and a damping element of Fig. 5.

### Detailed Description

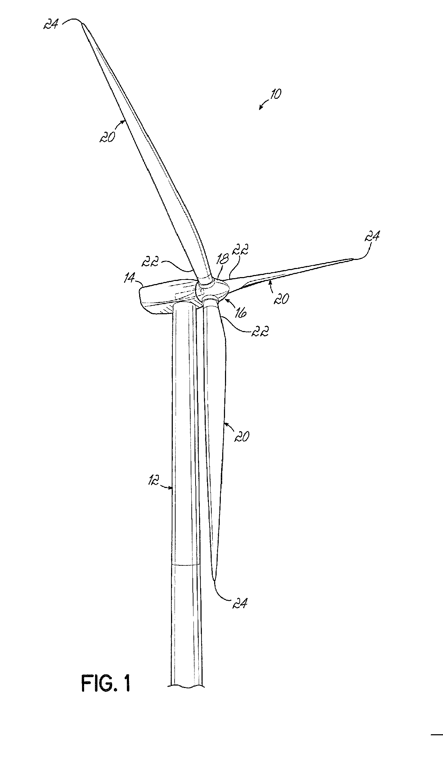

Fig. 1 shows one embodiment of a wind turbine 10. The wind turbine 10 generally includes a tower 12, a nacelle 14 supported by the tower 12, and a rotor 16 attached to the nacelle 14. The rotor 16 includes a hub 18 rotatably mounted to the nacelle 14 and a set of blades 20 coupled to the hub 18. More specifically, each blade 20 includes a root 22 coupled to the hub 18 and a tip 24 spaced from the hub 18. The blades 20 convert the kinetic energy of the wind into mechanical energy used to rotate the shaft of a generator (not shown), as is conventional. However, as will be described in greater detail below, one or more of the blades 20 are specially designed to reduce certain vibrations that create loads and increase the potential of damage or failure.

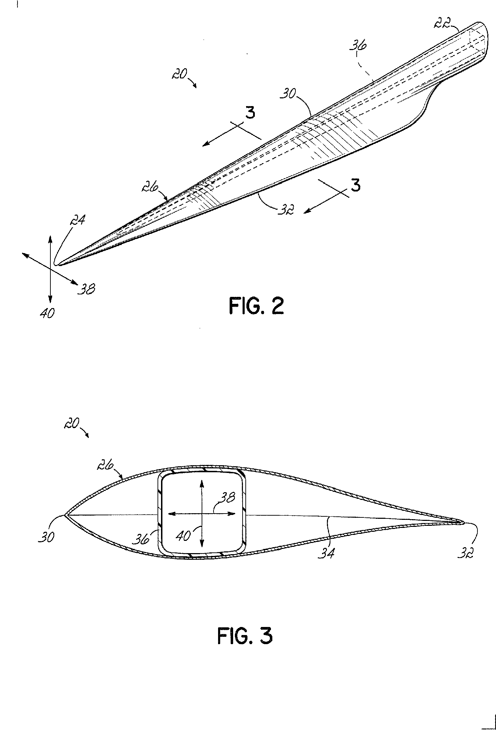

Figs. 2 and 3 schematically illustrate one of the blades 20 in further detail. The blade 20, in one embodiment, includes a shell body 26 extending between a leading edge 30 and a trailing edge 32 and forming an airfoil cross section. A chord 34 (Fig. 3) extends between leading edge 30 and trailing edge 32. An inner spar 36 extends from the root 22 toward the tip 24 within the shell body 26 to support at least a portion of the shell body 26. The blade 20 may be constructed using any materials and techniques suitable for wind turbines. For example, the shell body 26 may be constructed by laying materials in a mold and curing resin. The resin may be preimpregnated in the materials (e.g., pre-preg glass fibers) and/or introduced separately (e.g., using an infusion process), depending on the technique used.

Certain conditions may cause the blade 20 to experience vibrations in the plane of its rotation. The tip 24 moves back and forth in an edgewise direction along the chord 34 between the leading and trailing edges 30, 32 during these vibrations. The blade 20 may also experience vibrations in a flapwise direction, where the tip 24 moves perpendicular to the plane of rotation. As discussed above, flapwise vibrations have significant aerodynamic damping while edgewise vibrations have little to no aerodynamic damping. Previous attempts to dampen edgewise vibrations have focused on various mechanical apparatus, such as tuned liquid dampers or passive dampers, to apply forces in the opposite direction of movement of the tip 24 and thereby dampen the edgewise vibrations. However, in accordance with one embodiment of the invention, the edgewise vibrations of a wind turbine blade 20 are damped based on a different physical principle as compared to those described above.

In this regard, an important characteristic of a blade that largely influences the amplitude and damping (or possible instability) of edgewise vibrations is the structural pitch. The structural pitch refers to the direction in which the blade moves when it vibrates. If a blade vibrates only in the edgewise direction with zero flapwise motion, then the structural pitch is said to be zero. If edgewise motion and flapwise motion both occur, then the blade has some non-zero value of structural pitch which is determined by the relative level of flapwise and edgewise motion. The more flapwise motion the blade has during an edgewise movement (i.e., higher structural pitch), the more aerodynamic damping is placed on the blade. This increases the overall damping and can help prevent unstable edgewise vibrations.

The structural pitch is highly related to the principal axes of the blade cross section. The principal axes are the two directions in which the blade 20 is the stiffest and the most compliant. As shown in Figs. 2 and 3, a typical blade 20 has one principal axis 38 aligned with the chord 34 of the blade 20, and another principal axis 40 oriented perpendicularly to the chord 34 and the other principal axis 38. When the principal axes 38, 40 are aligned perfectly with the edgewise and flapwise directions of the blade 20 then the structural pitch of the blade 20 is zero and there can be no aerodynamic damping of the edgewise vibrations. Changing the direction of the principal axes, however, will modify the structural pitch of the blade 20 to a non-zero value and thereby provide an increased level of damping of the edgewise vibrations.

Thus, in accordance with one embodiment of the invention, edgewise vibrations of a wind turbine blade are damped by altering the principle axes of the blade, which in turn alters the structural pitch. More specifically, when the tip 24 moves in the edgewise direction toward the leading edge 30, a damping element 42 minimizes and/or reduces the edgewise vibrations by effectively introducing flapwise blade movement. In an exemplary embodiment, and as will be discussed in more detail below, the damping element 42 may include a relatively rigid structural member cooperating with or incorporated in the spar 36 of the wind turbine blade 20.

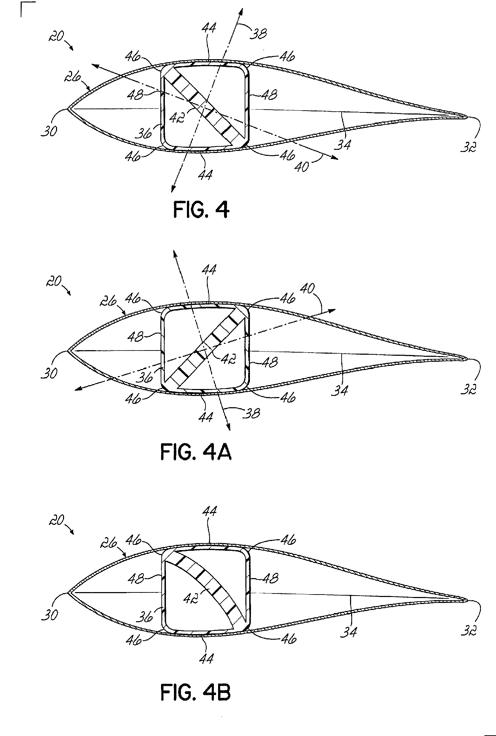

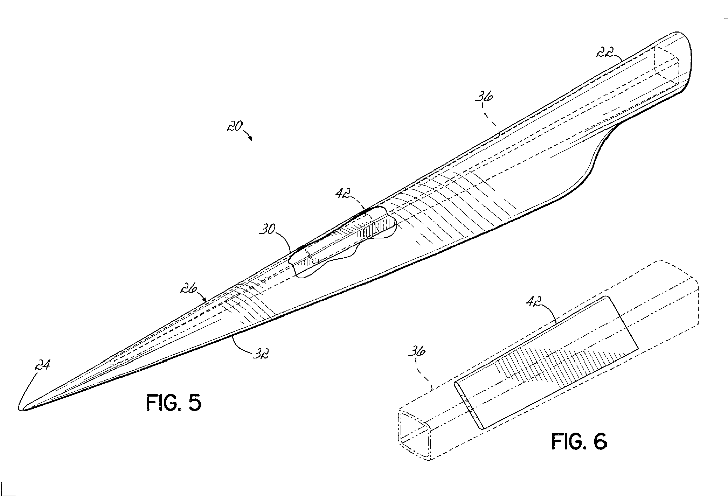

In this regard, various embodiments of the damping element 42 according to this invention are shown in Figs. 4-6. The spar 36, as shown in Figs. 4-4B, has a generally tubular configuration with a generally rectangular cross section. A pair of spaced first walls 44 are each oriented generally parallel to the chord 34 and joined at four corners 46 to a pair of spaced second walls 48, which are each oriented generally perpendicular to the chord 34. The damping element 42, according to various embodiments of this invention extends, generally diagonally across the rectangular cross section of the spar 36 between an opposing pair of the corners 46. In the embodiment shown in Figs. 4 and 4A, the damping element 42 is a generally planar, rigid structural element and, as shown in cross section in Figs. 4 and 4A, is generally linear. The planar configuration of the damping element 42 is shown more clearly in Fig. 6 according to one embodiment.

In alternative embodiments, the damping element 42 is nonplanar and, in a further modification of the damping element 42 according to this invention as shown in Fig. 4B, is curved or arcuate in cross section. In Fig. 4, the orientation of the damping element 42 extends between a corner 46 of the spar 36 above the chord 34 adjacent the leading edge 30 of the blade 20 to a corner 46 of the spar 36 below the chord 34 and adjacent the trailing edge 32 of the blade 20. In the embodiment shown in Fig. 4A, the damping element 42 is reoriented so that the corner 46 of the spar 36, to which the damping element 42 is joined adjacent the leading edge 30, is below the chord 34 and the corner 46 of the spar 36, to which the damping element 42 is joined adjacent the trailing edge 32 of the blade 20, is located above the chord 34. Moreover, the orientation of the damping element 42 in Fig. 4B is similar to that shown in Fig. 4, but in an alternative embodiment may be provided with an orientation similar to that shown in Fig. 4A.

As shown in Fig. 4, the damping element 42 reorients the structural pitch of the blade 20 to be oblique relative to the chord 34 (i.e., non-zero structural pitch) so as to reduce edgewise vibrations of the blade 20. In particular, the principal axis 40 is rotated to be generally more aligned with the orientation of the damping element 42 while the principal axis 38 is rotated to be generally more perpendicular to the plane of the damping element 42. Likewise, the principal axes 38, 40 of the embodiment shown in Fig. 4A have been reoriented into an oblique relationship relative to the chord 34 so as to reduce the edgewise vibrations of the blade 20. A comparison of the principal axes 38, 40 in Figs. 4 and 4A relative to the orientation shown in Fig. 3 demonstrates the oblique orientation of the structural pitch according to any one of a variety of embodiments within the scope of this invention.

As shown in Figs. 5 and 6, damping element 42, according to various embodiments of this invention, is coupled within the tubular configuration of the spar 36 and may extend along only a portion of the length of the spar 36 within the blade 20. Alternatively, multiple damping elements 42 positioned at spaced locations along the blade 20 may also be utilized to dampen edgewise vibrations of the blade 20 according to this invention.

According to various embodiments of this invention, the spar 36 of the blade 20 is modified to include a diagonally oriented damping element 42 such that the principal axes 38, 40 of the blade 20 are rotated to increase or decrease structural pitch and, thus, increase damping of the edgewise vibration. The damping element 42 is relatively stiff to add support to the spar 36 to thereby rotate the principal axes 38, 40 to more generally align with the support provided by the stiff damping element 42. The damping element 42 could be placed in alternative orientations within the spar 36 depending upon which direction the structural pitch rotation is needed. The damping element 42, according to one embodiment of this invention, is advantageously added only to the longitudinal region of the blade 20 where the blade 20 experiences maximum curvature during edgewise vibrations. The more pronounced change to the structural pitch results from extended length damping elements 42 within the spar 36.

The number and location of damping elements 42 within the shell body 26 may vary. Several of the damping elements 42, according to the embodiment of Fig. 4, may be located close to the root 22 of the blade 20. The damping elements 42 may be strategically positioned in locations where they will not only be effective at damping edgewise vibrations, but also at providing additional support to the shell body 26 where it is needed. The damping elements 42 may also be positioned in locations where they are easier to construct or install.

Advantageously, the damping element 42 may include a material with relatively high damping capacity, such as fiber-reinforced rubber. The material may be surrounded on one or more sides by a shell (not shown) constructed from fiberglass or another material that provides some structural support. This type of damping element 42 may be provided as a separate component that is coupled to the spar 36 by glue or the like during the manufacturing process of the blade 20.

The embodiments discussed above involve coupling the damping element 42 to the spar 36. However, it is also possible to couple the damping element 42 to other parts of the blade 20 and still achieve a greater degree of freedom in the flapwise direction than in the edgewise direction.

Again, those skilled in the art will appreciate that there are different ways of constructing the damping element 42 within this invention. Indeed, the damping element 42 may be constructed similar to any of the embodiments discussed above or other embodiments.

Furthermore, associating the damping element 42 with the inner spar 36 enables the design and manufacture of the shell body 26 to be optimized without having to take into account the attachment of the damping element 42. Loads created by the damping element 42 are transferred to the inner spar 36 rather than the shell body 26. Coupling the damping element 42 along the inner spar 36 may also help increase the overall stiffness of the blade 20. As a result, thinner blade designs may be possible.

During the manufacturing process of the blade 20, the damping element 42 may be coupled to the inner spar 36 by gluing the damping element 42 thereto. This may come before positioning the inner spar 36 relative to the shell body 26, or just prior to closing the mould (not shown) that assembles the shell body 26 together. The length of the damping element 42 may vary such that there may be one long damping element 42 or a plurality of damping elements 42 coupled to the inner spar 36.

The embodiments described above are merely examples of the invention defined by the claims that appear below. Those skilled in the art will appreciate additional examples, modifications, and advantages based on the description. Additionally, those skilled in the art will appreciate that individual features of the various embodiments may be combined in different ways. Accordingly, departures may be made from the details of this disclosure without departing from the scope or spirit of the general inventive concept.

## Claims

1. A blade for a wind turbine, comprising:
a shell body including a leading edge and a trailing edge, a chord of the shell body extending between the leading and trailing edges;
a spar located within the shell body and supporting at least a portion of the shell body; and
a damping element coupled to the spar, the damping element being configured to orient a structural pitch of the blade obliquely relative to the chord so as to reduce edgewise vibrations of the blade.

2. The blade of claim 1 wherein the spar has a generally tubular configuration over at least a portion of its length and the damping element is contained within the tubular configuration of the spar.

3. The blade of claim 2 wherein the damping element extends between opposite edges of the tubular configuration of the spar.

4. The blade of claim 2 wherein the tubular configuration of the spar has a generally rectangular cross section with a pair of spaced first walls each oriented generally parallel to the chord and joined at four corners to a pair of spaced second walls each oriented generally perpendicularly to the chord, the damping element extending diagonally across the rectangular cross section of the spar between a pair of the corners.

5. The blade of claim 4 wherein the damping element is generally planar.

6. The blade of claim 4 wherein the damping element is nonplanar.

7. The blade of claim 6 wherein the damping element is arcuate in cross section.

8. The blade of claim 1 wherein the damping element does not extend the entire length of the blade.

9. A blade for a wind turbine, comprising:
a shell body including a leading edge and a trailing edge, a chord of the shell body extending between the leading and trailing edges;
a spar located within the shell body and supporting at least a portion of the shell body, the spar having a generally tubular configuration over at least a portion of its length; and
a damping element coupled to the spar and being contained within the tubular configuration of the spar and extending less than the entire length of the spar, the damping element being configured to orient a structural pitch of the blade obliquely relative to the chord so as to reduce edgewise vibrations of the blade, the damping element having a generally linear or an arcuate cross-sectional configuration;
wherein the tubular configuration of the spar has a generally rectangular cross section with a pair of spaced first walls each oriented generally parallel to the chord and joined at four corners to a pair of spaced second walls each oriented generally perpendicularly to the chord, the damping element extending diagonally across the rectangular cross section of the spar between a pair of the corners.

10. A wind turbine, comprising:
a tower;
a nacelle supported by the tower;
a rotor including a hub rotatably coupled to the nacelle; and
at least one blade mounted to the hub;
the at least one blade further comprising
(a) a shell body including a leading edge and a trailing edge, a chord of the shell body extending between the leading and trailing edges;
(b) a spar located within the shell body and supporting at least a portion of the shell body; and
(c) a damping element coupled to the spar, the damping element being configured to orient a structural pitch of the blade obliquely relative to the chord so as to reduce edgewise vibrations of the blade.

11. The wind turbine of claim 10 wherein the spar has a generally tubular configuration over at least a portion of its length and the damping element is contained within the tubular configuration of the spar.

12. The wind turbine of claim 11 wherein the damping element extends between opposite edges of the tubular configuration of the spar.

13. The wind turbine of claim 11 wherein the tubular configuration of the spar has a generally rectangular cross section with a pair of spaced first walls each oriented generally parallel to the chord and joined at four corners to a pair of spaced second walls each oriented generally perpendicularly to the chord, the damping element extending diagonally across the rectangular cross section of the spar between a pair of the corners.

14. The wind turbine of claim 13 wherein the damping element is generally planar.

15. The blade of claim 10 wherein the damping element does not extend the entire length of the blade.

16. A method of dissipating edgewise vibrations in the blade of a wind turbine, the method comprising the steps of:
coupling a damping element to at least a section of a spar within the blade of the wind turbine; and
adjusting a structural pitch of the blade so that it is obliquely oriented relative to a chord of the blade extending between a leading and a trailing edge of the blade.

17. The method of claim 16 wherein the spar has a tubular configuration and the coupling step further comprises:
positioning the damping element within the tubular configuration of the spar.

18. The method of claim 17 wherein the positioning step further comprises:
limiting the longitudinal length of the damping element to less than the length of the blade.

19. The method of claim 17 wherein the tubular configuration of the spar has a generally rectangular cross section with a pair of spaced first walls each oriented generally parallel to the chord and joined at four corners to a pair of spaced second walls each oriented generally perpendicularly to the chord, the method further comprising:
extending the damping element diagonally across the rectangular cross section of the spar between a pair of the corners.

20. The method of claim 16 wherein the coupling step further comprises:
retro-fitting an existing blade by installing the damping element onto the spar.
